# EUROPEAN PATENT APPLICATION

(11) **EP 4 510 427 A1**
(43) Date of publication of application: **19.02.2025**
(21) Application number: 24156498.8
(22) Date of filing: 08.02.2024
(51) Int. Cl.: H02K 3/28, H02K 15/06

(54) **MOTOR STATOR WINDING STRUCTURE**

(30) Priority: 18.08.2023 CN 202311044887
(71) Applicant: Delta Electronics, Inc., Taoyuan City 333 (TW)
(72) Inventor: HSU, Yu-Ching, 333 Taoyuan (TW); CHEN, Yi-No, 333 Taoyuan (TW)
(74) Representative: Nederlandsch Octrooibureau

(57) **Abstract**

A motor stator winding structure includes a stator core and slot-positions. The stator core includes an insertion side and an extension side. The hairpin wires are configured to be arranged into slot-positions of the phase slots of the same phases of the magnetic pole regions. A first phase winding includes first hairpin wires of the hairpin wires inserted from an entry phase slot-position of a first phase. A second phase winding includes second hairpin wires of the hairpin wires inserted from an entry phase slot-position of a second phase. A third phase winding includes third hairpin wires of the hairpin wires inserted from an entry phase slot-position of a third phase. The entry phase slot-position of the first phase, the entry phase slot-position of the second phase and the entry phase slot-position of the third phase are located in three different magnetic pole regions respectively.

## Description

### BACKGROUND

### Field of Invention

The present disclosure relates to a motor stator, and more particularly to a winding structure of a motor stator with a reduced axial space configuration.

### Description of Related Art

A conventional motor stator with hairpin-shaped wires often has a circuit design of multiple parallel connected windings. A variety of hairpin-shaped wires are often required for completing the winding structure of the entire motor stator, which increases the complexity of motor stator manufacturing. In view of such issue, motor manufacturers are actively seeking appropriate wire winding methods to more effectively control the types and production complexity of hairpin-shaped wires required for manufacturing motor stators, and reducing axial space configuration.

### SUMMARY

The present disclosure proposes a motor stator winding structure for overcoming or alleviating the problems of the prior art.

In one or more embodiments, a motor stator winding structure includes a ring-shaped stator core and a plurality of slot-positions. The ring-shaped stator core defines a rotor accommodation space at a center of the stator core, wherein the stator core includes an insertion side and an extension side allowing a plurality of hairpin wires inserted from the insertion side and extended out from the extension side. The slot-positions are located on the stator core to surround the rotor accommodation space circumferentially. The slot-positions form a plurality of radially-adj acent slot-position layers, the stator core includes a plurality of magnetic pole regions, each magnetic pole region includes a plurality of phases, and each phase includes a plurality of phase slots. The hairpin wires are configured to be arranged into the slot-positions of the phase slots of the same phases of the magnetic pole regions, and the hairpin wires are connected to form a plurality of parallel windings. At least a first phase winding includes a plurality of first hairpin wires of the hairpin wires inserted from an entry phase slot-position of a first phase, and includes a plurality of first phase return connection wires. At least a second phase winding includes a plurality of second hairpin wires of the hairpin wires inserted from an entry phase slot-position of a second phase, and includes a plurality of second phase return connection wires. At least a third phase winding includes a plurality of third hairpin wires of the hairpin wires inserted from an entry phase slot-position of a third phase, and includes a plurality of third phase return connection wires. The entry phase slot-position of the first phase, the entry phase slot-position of the second phase and the entry phase slot-position of the third phase are located in three different magnetic pole regions respectively. The first phase return connection wires, the second phase return connection wires and the third phase return connection wires have respective portions that protrude from the insertion side of the stator core and are not overlapped with each other in an axial direction of the stator core.

The winding structure of the motor stator disclosed herein uses the above-mentioned winding method and winding structure, and the entry slot-positions of different phase windings are respectively arranged in different magnetic pole regions. For example, conventional entry slot-positions of the windings of a specific phase are arranged in different magnetic pole regions, but are offset in current design so that the return connection wires of different phase windings protruding from the insertion side of the stator core are not overlapped with each other in the radial direction. Therefore, the design of return connection wires can be simplified and the three-phase windings can share identical types of return connection wires. The shapes and types of wires can be reduced, thereby effectively controlling the type and production complexity of wires required to manufacture the motor stator, and reducing the axial space configuration.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1 illustrates a circuit diagram of a motor stator according to an embodiment of the present disclosure;
Fig. 2 illustrates a side view of a motor stator according to an embodiment of the present disclosure;
Fig. 3 illustrates a top view of a stator core of a motor stator according to an embodiment of the present disclosure;
Fig. 4 illustrates two windings configured in U-phases of a 48-slot motor stator according to an embodiment of the present disclosure;
Fig. 5 illustrates two windings configured in V-phases of a 48-slot motor stator according to an embodiment of the present disclosure;
Fig. 6 illustrates two windings configured in W-phases of a 48-slot motor stator according to an embodiment of the present disclosure;
Fig. 7 illustrates a perspective view of returm wires in a winding structure of a motor stator according to an embodiment of the present disclosure;
Fig. 8 illustrates a top view of the returm wires in Fig. 7;
Fig. 9 illustrates a perspective view of returm wires in a winding structure of a motor stator according to another embodiment of the present disclosure; and
Fig. 10 illustrates a top view of the returm wires in Fig. 9.

### DETAILED DESCRIPTION

Reference will now be made in detail to the present embodiments, examples of which are illustrated in the accompanying drawings. Wherever possible, the same reference numbers are used in the drawings and the description to refer to the same or like parts. Inserting/protruding wire described herein have the same meaning (can also be swapped). From the perspective of the circuit configuration, the positive [⊕] contact can be referred as an inserting, and the negative [⊙] (neutral) contact can be referred as a protruding wire.

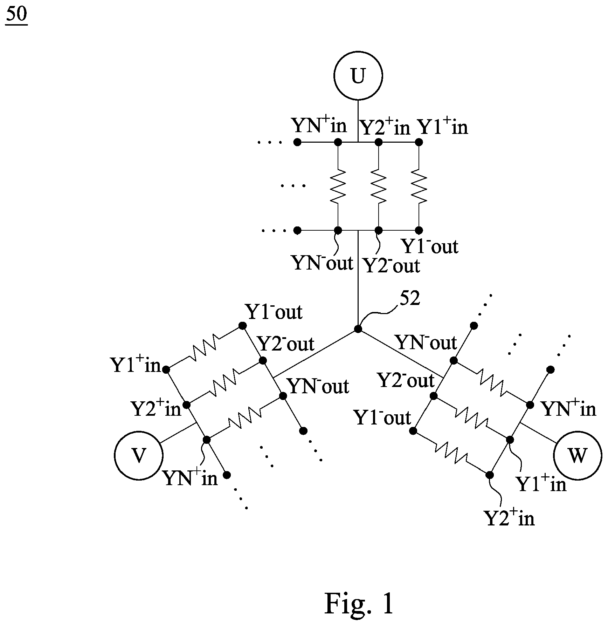

Reference is made to Fig. 1, which illustrates a circuit diagram of a motor stator according to an embodiment of the present disclosure. A circuit 50 includes U, V, and W-phase windings. Each (U, V, W) phase winding includes multiple parallel-connected windings, e.g., Y1~YN. The negative end (Q) of each winding is connected to the neutral terminal 52 (i.e., each U, V, and W-phase has N negative ends connected to the neutral terminal), and the positive end (⊕) of each winding is connected to a corresponding phase terminal (i.e., each U, V, and W-phase has N positive ends connected to the corresponding phase terminals).

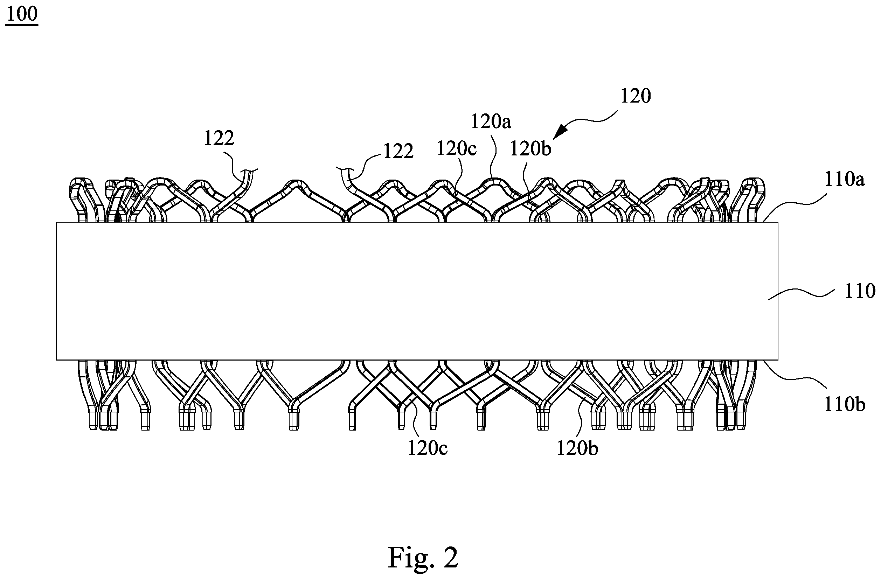

Reference is made to Fig. 2, which illustrates a side view of a motor stator 100 according to an embodiment of the present disclosure. The circuit 50 disclosed herein is intended to be implemented by a stator core 110 and a plurality of hairpin wires 120. Specifically, the plurality of leg portions (120b, 120c) of the hairpin wires 120 are inserted into corresponding (phase) slots from the insertion side 110a of the stator core 110, and passed out from the extension side 110b of the stator core 110 to be appropriately bent. When the hairpin wire 120 is installed on the stator core 110, its U-shaped portion 120a is located at the insertion side 110a of the stator core 110, and its leg portions (120b, 120c) are located at the extension side 110b. After all the hairpin wires 120 belonging to the same winding are inserted into the corresponding (phase) slots, the corresponding leg portions (120b, 120c) of the extension side 110b can be electrically connected, so that all the hairpin wires 120 of the same winding are electrically connected to each other, for example, by welding method to electrically connect multiple corresponding leg portions (120b, 120c). In some embodiments of the present invention, the negative terminal and the positive terminal of the winding formed by the hairpin wires 120 can be protruded from the insertion side 110a or the extension side 110b of the stator core 110 and connected to the neutral terminal and the phase terminal respectively.

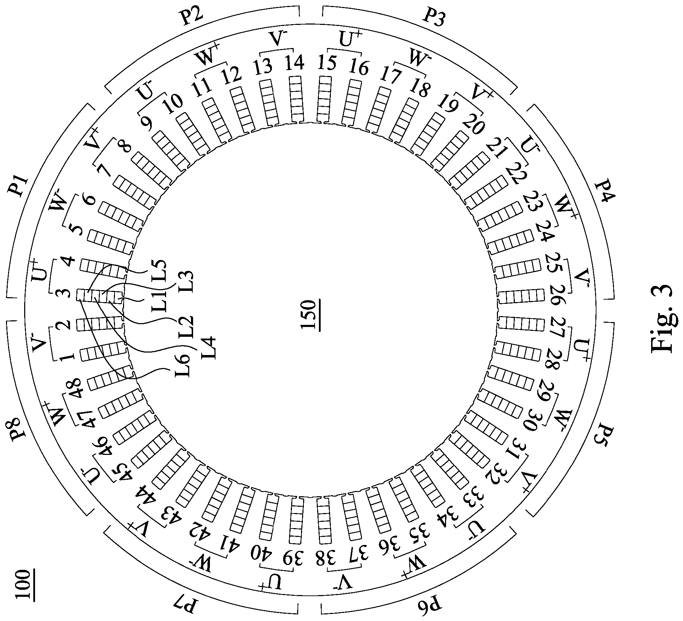

Reference is made to Fig. 3, which illustrates a top view of a stator core of a motor stator according to an embodiment of the present disclosure. This view of the stator core is a top view of the insertion side of the stator core. This stator core 110 is used to realize a motor stator with 8 magnetic pole regions (P1-P8), 48 (phase) slots (1~48), and 6 layers of wires. Each (phase) slot contains a plurality of radially adjacent slot-positions (i.e., "squares" in the figure), and each slot-position can accommodate a hairpin wire. All the slots are arranged in a circumferential direction around a rotor accommodation space 150 to form a plurality of radially-adjacent annular slot-position layers (L1~L6). The eight magnetic pole regions (P1~P8) equally divide the stator core 110 in the circumferential direction, and each magnetic pole region has U, V, and W-phases. Each phase has Q (phase) slots, e.g., a number of circumferentially adjacent (phase) slots in the figure is two (Q=2). Each (phase) slot contains a plurality of slot-positions in the radial direction. The 48 slots in this embodiment are equal to: 8 (magnetic pole region) x 3 (phase/magnetic pole region) x 2 (slot/phase). The 48 (phase) slots and their slot-positions surround the rotor accommodation space 150 in the circumferential direction, and each (phase) slot extends from an inner circumference of the stator core 110 (e.g., away from the rotor accommodation space 150) in a radial direction. Each (phase) slot can accommodate 6 slot-position layers of inserted hairpin wires, i.e., L1 to L6 layers in sequence from the inside to the outside in the radial direction. The stator core 110, which is viewed from a plan view as a hollow ring, defines a rotor accommodation space 150 in its center for accommodating a rotor. The L1 layer is closest to the rotor accommodation space 150, and the L6 layer is farthest from the rotor accommodation space 150 in the radial direction. In some embodiments of the present invention, the (phase) slots in the magnetic pole regions have the same or nearly the same cross-sectional dimensions, and the spacing between the (phase) slots also have the same or nearly the same cross-sectional dimensions, but not being limited therein.

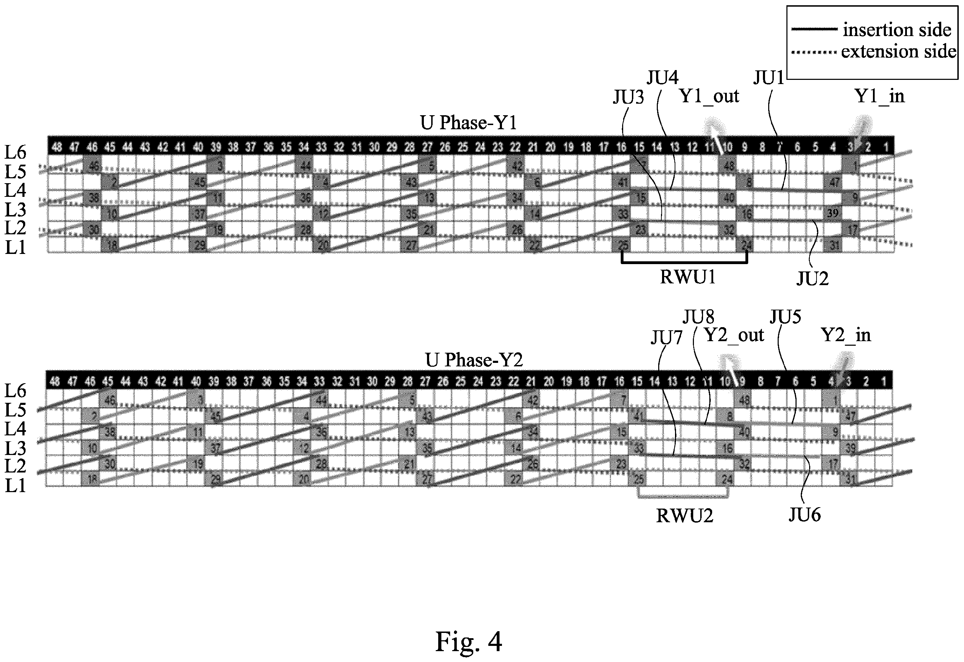

Reference is made to both Figs. 3 and 4, and Fig. 4 illustrates two windings configured in U-phases of a 48-slot motor stator according to an embodiment of the present disclosure. The above-mentioned stator core 110 is used to realize a motor stator winding structure with 8 magnetic pole regions, 48 (phase) slots, and 6 layers of wires, and each U, V, or W-phase has 2 parallel connected windings. Taking the U-phase as an example, a conductor wire of the winding Y1 (for example, a conductor wire 122 in Figure 2) enters the slot-position (1) of the L6 layer of the 3rd slot of the U-phase (Y1_in) on the extension side of the stator core, and then connected to the slot-position (2) of the L5 layer of the 45th slot of the U-phase on the extension side of the stator core, and then connected to the slot-position (3) of the L6 layer of the 39th slot of the U-phase on the insertion side of the stator core, and then connected to the slot-position (4) of the L5 layer of the 33rd slot of the U-phase on the extension side of the stator core, and then connected to the slot-position (5) of the L6 layer of the 27th slot of the U-phase on the insertion side of the stator core, and then connected to the slot-position (6) of the L5 layer of the 21st slot of the U-phase on the extension side of the stator core, and then connected to the slot-position (7) of the L6 layer of the 15th slot of the U-phase on the insertion side of the stator core, and then connected to the slot-position (8) of the L5 layer of the 9th slot of the U-phase on the extension side of the stator core. The wires of winding Y1 has been wound through the U-phase (phase) slots of the L5 and L6 layers at this point, and then the layer-changing connection wire JU1 is used to connect from the slot-position (8) of the L5 layer of the 9th slot of the U-phase to the slot-position (9) of the L4 layer of the 3rd slot of the U-phase on the insertion side of the stator core, and then connected to the slot-position (10) of the L3 layer of the 45th slot of the U-phase on the extension side of the stator core, and then connected to the slot-position (11) of the L4 layer of the 39th slot of the U-phase on the insertion side of the stator core, and then connected to the slot-position (12) of the L3 layer of the 33rd slot of the U-phase on the extension side of the stator core, and then connected to the slot-position (13) of the L4 layer of the 27th slot of the U-phase on the insertion side of the stator core, and then connected to the slot-position (14) of the L3 layer of the 21st slot of the U-phase on the extension side of the stator core, and then connected to the slot-position (15) of the L4 layer of the 15th slot of the U-phase on the insertion side of the stator core, and then connected to the slot-position (16) of the L3 layer of the 9th slot of the U-phase on the extension side of the stator core. The wires of winding Y1 have been wound through the U-phase (phase) slots of the L3 to L6 layers at this point, and then a layer-changing connection wire JU2 is used to connect from the slot-position (16) of the L3 layer of the 9th slot of the U-phase to the slot-position (17) of the L2 layer of the 3rd slot of the U-phase on the insertion side of stator core, and then connected to the slot-position (18) of the L1 layer of the 45th slot of the U-phase on the extension side of the stator core, and then connected to the slot-position (19) of the L2 layer of the 39th slot of the U-phase on the insertion side of the stator core, and then connected to the slot-position (20) of the L1 layer of the 33rd slot of the U-phase on the extension side of the stator core, and then connected to the slot-position (21) of the L2 layer of the 27th slot of the U-phase on the insertion side of the stator core, and then connected to the slot-position (22) of the L1 layer of the 21st slot of the U-phase on the extension side of the stator core, and then connected to the slot-position (23) of the L2 layer of the 15th slot of the U-phase on the insertion side of the stator core, and then connected to the slot-position (24) of the L1 layer of the 9th slot of the U-phase on the extension side of the stator core. The wires of winding Y1 have been wound through the U-phase (phase) slots of the L1 to L6 layers at this point, and then a return connection wire RWU1 is used in the opposite circumferential direction to connect from the slot-position (24) of the L1 layer of 9th slot of the U-phase to the slot-position (25) of the L1 layer of the 16th slot of the U-phase on the insertion side of the stator core, and then connected to the slot-position (26) of the L2 layer of the 22nd slot of the U-phase on the extension side of the stator core, and then connected to to the slot-position (27) of the L1 layer of the 28th slot of the U-phase on the insertion side of the stator core, and then connected to the slot-position (28) of the L2 layer of the 34th slot of the U-phase on the extension side of the stator core, and then connected to the slot-position (29) of the L1 layer of the 40th slot of the U-phase on the insertion side of the stator core, and then connected to the slot-position (30) of the L2 layer of the 46th slot of the U-phase on the extension side of the stator core, and then connected to the slot-position (31) of the L1 layer of the 4th slot of the U-phase on the insertion side of the stator core, and then connected to the slot-position (32) of the L2 layer of the 10th slot of the U-phase on the extension side of the stator core. The wires of winding Y1 have been wound through the U-phase (phase) slots of the L1-L2 layer at this point after the return connection wire RWU1, and then a layer-changing connection wire JU3 is used to connect from the slot-position (32) of the L2 layer of the 10th slot of the U-phase to the slot-position (33) of the L3 layer of the 16th slot of the U-phase on the insertion side of the stator core, and then connected to the slot-position (34) of the L4 layer of the 22nd slot of the U-phase on the extension side of the stator core, and then connected to to the slot-position (35) of the L3 layer of the 28th slot of the U-phase on the insertion side of the stator core, and then connected to the slot-position (36) of the L4 layer of the 34th slot of the U-phase on the extension side of the stator cor, and then connected to the slot-position (37) of the L3 layer of the 40th slot of the U-phase on the insertion side of the stator core, and then connected to the slot-position (38) of the L4 layer of the 46th slot of the U-phase on the extension side of the stator core, and then connected to the slot-position (39) of the L3 layer of the 4th slot of the U-phase on the insertion side of the stator core, and than then connected to the slot-position (40) of the L4 layer of the 10th slot of the U-phase on the extension side of the stator core. The wires of winding Y1 have been wound through the U-phase (phase) slots of the L1 to L4 layers at this point after the return connection wire RWU1, and then a layer-changing connecting wire JU4 is used to connect from the slot-position (40) of the L4 layer of the 10th slot of the U-phase to the slot-position (41) of the L5 layer of the 16th slot of the U-phase on the insertion side of the stator core, and then connected to the slot-position (42) of the L6 layer of the 22nd slot of the U-phase on the extension side of the stator core, and then connected to the slot-position (43) of the L5 layer of the 28th slot of the U-phase on the insertion side of the stator core, and then connected to the slot-position (44) of the L6 layer of the 34th slot of the U-phase on the extension side of the stator core, and then connected to the slot-position (45) of the L5 layer of the 40th slot of the U-phase on the insertion side of the stator core, and then connected to the slot-position (46) of the L6 layer of the 46th slot of the U-phase on the extension side of the stator core, and then connected to the slot-position (47) of the L5 layer of the 4th slot of the U-phase on the insertion side of the stator core, and then connected to the slot-position (48) of the L6 layer of the 10th slot of the U-phase on the extension side of the stator core, and the wire (Y1_out) is output at this slot-position.

The wires of the U-phase winding Y2 are also wound in a similar manner to the winding Y1 according to the sequence from slot-position (1) to slot-position (48) illustrated in Figure 4, that is, the wire (Y2_in) enters at slot-position (1) of the 4th slot of the L6 layer of the U-phase and outputs (Y2_out) at slot-position (48) of the L6 layer of the 10th slot of the U-phase, and layer-changing connection wires JU5-JU8 are used for layer-changing connections. One of the differences between U-phase winding Y2 and U-phase winding Y1 is the span of the return connection wires. A span of the return connection wire RWU1 of U-phase winding Y1 on the insertion side of the stator core is 7 slots while a span of the return connection wire RWU2 of U-phase winding Y2 on the insertion side of the stator core is 5 slots. The U-phase winding is connected to the phase terminal of the U-phase at the entry slot-position (Y1_in, Y2_in), and connected to the neutral terminal (Neutral End) at the output slot-position (Y1_out, Y2_out).

The winding principles based upon the above-mentioned L1 to L2 layers, L3 to L4 layers and L5 to L6 layers are all the same, except for the size specifications of the layer-changing connection wires JU1-JU8 (for example, the span is 6 slots, equal to one pole pitch), the hairpin wires used in the L1 to L2 layer, L3 to L4 layer and L5 to L6 layer have the same span on the insertion side (for example, 6 slots, equal to one pole pitch), so the hairpin wire of a single size specification can be used. Specifically, the pole pitch of the above-mentioned L1 to L2 layers, L3 to L4 layers, and L5 to L6 layers is 48 slots/8 magnetic pole regions, which is equal to 6 slots. A common span of the transpolar hairpin wire on the insertion side is also 6 slots. The span of the return connection wire RWU1 is a pole pitch plus one slot, which is equal to 7 slots. The span of the return connection wire RWU2 is a pole pitch minus one slot, which is equal to 5 slots. Both the return connection wire RWU1 and the return connection wire RWU2 are arranged in the slot-position layer (i.e., L1) closest to the rotor accommodation space 150 in the radial direction.

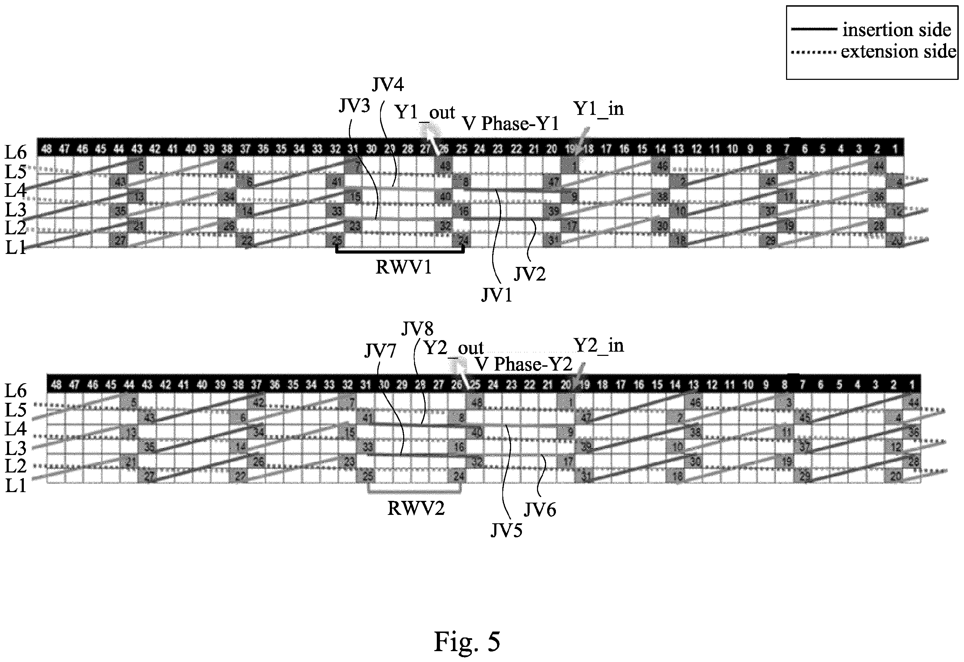

Reference is made to both Figs. 3 and 5, and Fig. 5 illustrates two windings configured in V-phases of a 48-slot motor stator according to an embodiment of the present disclosure. The V-phase also has two parallel connected windings Y1 and Y2. The conductor wire (Y1_in) of the V-phase winding Y1 enters the slot-position (1) of the L6 layer of the 19th slot of the V-phase on the extension side of the stator core. The conductor wire (Y2_in) of the V-phase winding Y2 enters the slot-position (1) of the L6 layer of the 20th slot of the V-phase on the extension side of the stator core. Both conductor wires are located in the magnetic pole region P3 and are located at the farthest slot-position layer from the rotor accommodation space 150 (referring to Figure 3). The entry slot-position (1) of the U-phase windings (Y1, Y2) is located in magnetic pole region P1 (slots 3 and 4). Therefore, the entry slot-position (1) of the V-phase winding (Y1, Y2) and the entry slot-position (1) of the U-phase winding (Y1, Y2) are located in different magnetic pole regions. The V-phase windings Y1 and Y2 are wound in a similar manner to the U-phase windings Y1 and Y2 according to the sequence of slot-position (1) to slot-position (48) in Figure 5. The conductor wire (Y1_in) of the V-phase winding Y1 enters the slot-position (1) of the L6 layer of the 19th slot of the V-phase on the extension side of the stator core. During winding, layer-changing connection wires JV1-JV4 are used for layer-changing connections, and an output wire (Y1_out) is at the slot-position (48) of L6 layer of the 26th slot on the extension side of the stator core. The conductor wire (Y2_in) of the V-phase winding Y2 enters the slot-position (1) of the L6 layer of the 20th slot of the V-phase on the extension side of the stator core. During winding, layer-changing connection wire JV5-JV8 are used for layer-changing connection, and an output wire (Y2_out) is at the slot-position (48) of the L6 layer of the 25th slot on the extension side of the stator core. A span of a return connection wire RWV1 on the insertion side of the stator core is 7 slots (from the slot-position (24) of the L1 layer of the 25th slot of the V-phase to the slot-position (25) of the L1 layer of the 32nd slot of the V-phase on the insertion side of the stator core ), and a span of a return connection wire RWV2 on the insertion side of the stator core is 5 slots (from the slot-position (24) of the L1 layer of the 26th slot of the V-phase to the slot-position(25) of the L1 layer of the 31st slot of the V-phase on the insertion side of the stator core). The V-phase winding is connected to the phase terminal of the V-phase at the entry slot-position (Y1_in, Y2_in), and connected to the neutral terminal (Neutral End) at the output slot-position (Y1_out, Y2_out). A common span of the transploar hairpin wires of the V-phase winding on the insertion side is also 6 slots. A span of the return connection wire RWV1 is a pole pitch plus one slot, which is equal to 7 slots. A span of the return connection wire RWV2 is a pole pitch minus one slot, which is equal to 5 slots. Both the return connection wire RWV1 and the return connection wire RWV2 are arranged in the slot-layer (for example, L1), which is closest to the rotor accommodation space 150 in the radial direction.

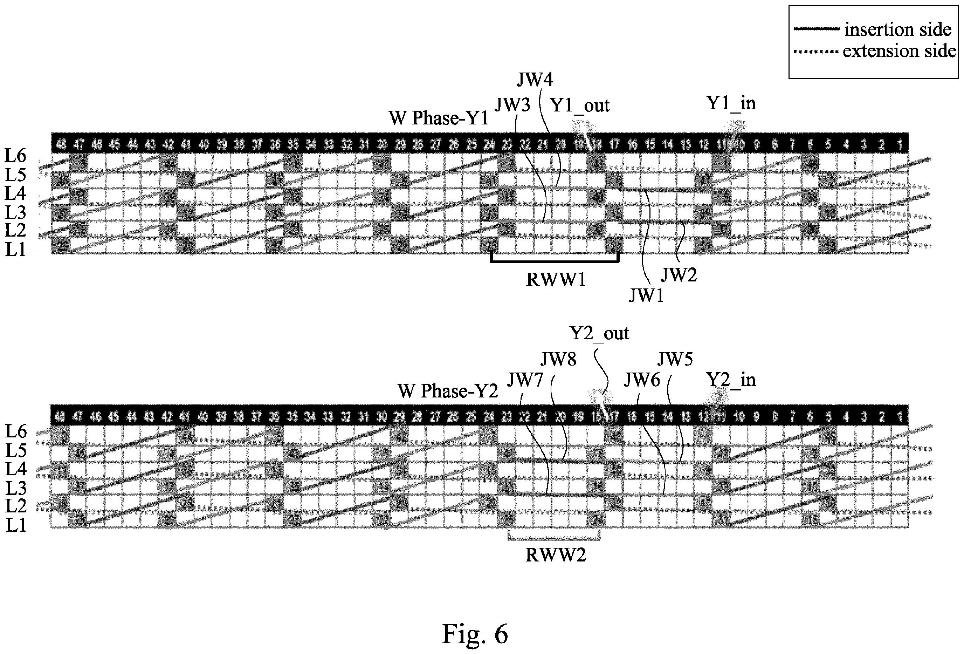

Reference is made to both Figs. 3 and 6, and Fig. 6 illustrates two windings configured in W-phases of a 48-slot motor stator according to an embodiment of the present disclosure. The W-phase also has two parallel connected windings Y1 and Y2. The conductor conductor (Y1_in) of the W-phase winding Y1 enters the slot-position (1) of the L6 layer of the 11th slot of the W-phase on extension side of the stator core, while the conductor conductor (Y2_in) of the W-phase winding Y2 enters the slot-position (1) of the L6 layer of the 12th slot of the W-phase on extension side of the stator core. Both conductor wires are located in magnetic pole region P2 and located at the slot-position layer farthest from the rotor accommodation space 150 (referring to Figure 3). The entry slot-position (1) of the W-phase winding (Y1, Y2) is located in magnetic pole region P2 (slots 11 and 12). Therefore, the entry slot-position of the W-phase winding (Y1, Y2), the entry slot-position of the V-phase winding (Y1, Y2), and the entry slot-position of the U-phase winding (Y1, Y2) are located in three different magnetic pole regions. In detail, the entry slot-positions (1) of the two windings of the U-phase are both located in the magnetic pole region P1, the entry slot-positions (1) of the two windings of the V-phase are both located in the magnetic pole region P3, and the entry slot-positions (1) of the two windings of the W-phase are located in the magnetic pole region P2. It should be noted that the entry slot-position (1) of the V-phase winding is offset compared with a conventional entry slot-position of the V-phase winding, so that the entry slot-positions (1) of the U, V, and W-phases are located in three different magnetic pole regions (P1, P3, P2) respectively. In some embodiments of the present invention, the entry slot-position of the W-phase winding (Y1, Y2), the entry slot-position of the V-phase winding (Y1, Y2) and the entry slot-position of the U-phase winding (Y1, Y2) are located in three continuous and different magnetic pole regions (P1, P2, P3). The W-phase windings Y1 and Y2 are wound in a similar manner to the U-phase windings Y1 and Y2 or the V-phase windings Y1 and Y2 according to the sequence of slot-position (1) to slot-position (48) in Figure 6. The conductor wire (Y1_in) of the W-phase winding Y1 enters the slot-position (1) of the L6 layer of the 11th slot on extension side of the stator core. During winding, layer-changing connection wires JW1-JW4 are used for layer-changing connection, and an output wire (Y1_out) is at the slot-position (48) of L6 layer of the 18th slot on the extension side of the stator core. The conductor wire (Y2_in) of the W-phase winding Y2 enters the slot-position (1) of the L6 layer of the 12th slot on the extension side of the stator core. During winding, layer-changing connection wires JW5-JW8 are used for layer-changing connection, and an output wire (Y2_out) is at the slot-position (48) of the L6 layer of slot 17 on the extension side of the stator core. A span of a return connection wire RWW1 on the insertion side of the stator core is 7 slots (from the slot-position (24) of the L1 layer of the 17th slot of the W-phase to the slot-position (25) of the L1 layer of the 24th slot of the W-phase on the insertion side of the stator core), and a span of a return connection wire RWW2 on the insertion side of the stator core is 5 slots (from the slot-position (24) of the L1 layer of the 18th slot of the W-phase to the slot-position (25) of the L1 layer of the 23rd slot of the W-phase on the insertion side of the stator core). The W-phase winding is connected to the phase terminal of the W-phase at the entry slot-position (Y1_in, Y2_in), and connected to the neutral terminal (Neutral End) at the output slot-position (Y1_out, Y2_out). A common span of the transploar hairpin wire of the W-phase winding on the insertion side is also 6 slots. A span of the return connection wire RWW1 is a pole pitch plus one slot, which is equal to 7 slots. A span of the return connection wire RWW2 is a pole pitch minus one slot, which is equal to 5 slots. Both the return connection wire RWW1 and the return connection wire RWW2 are arranged at the slot-position layer (for example, L1), which is closest to the rotor accommodation space 150 in the radial direction.

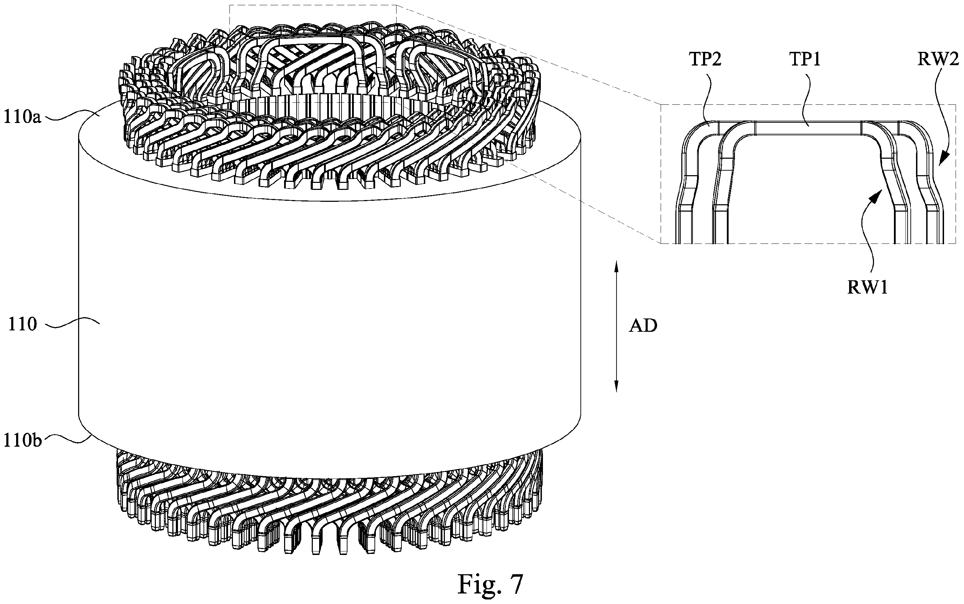

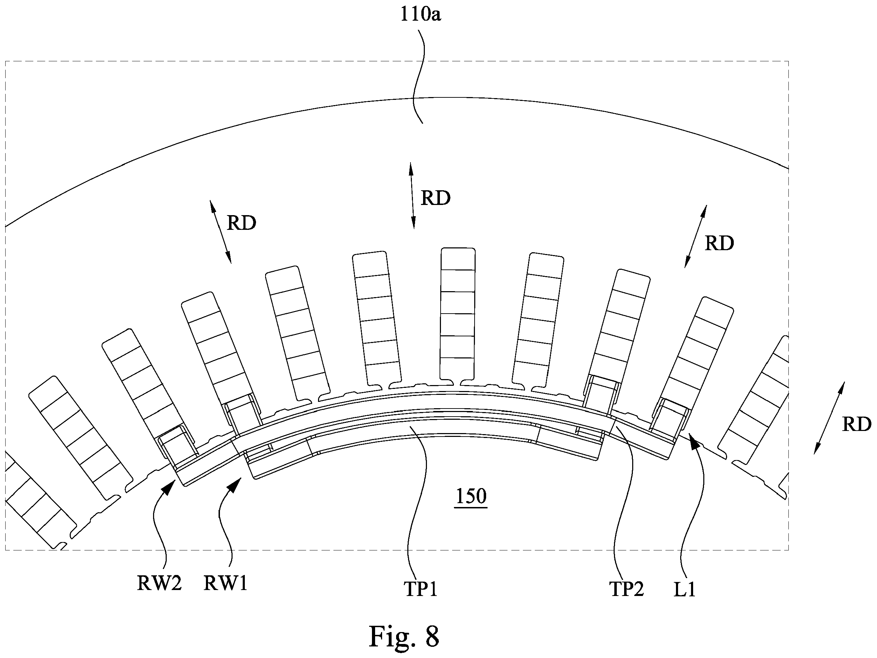

Reference is made to Figs. 7 and 8, Fig. 7 illustrates a perspective view of returm wires in a winding structure of a motor stator according to an embodiment of the present disclosure, and Fig. 8 illustrates a top view of the returm wires in Fig. 7. Both ends of the return connection wire RW1 and the return connection wire RW2 are arranged at the slot-position layer L1 closest to the rotor accommodation space 150. In the embodiment of the present invention, the return connection wire RW1 and the return connection wire RW2 have respective top portions (TP1, TP2) aligned at a height in the axial direction AD, and the top portions (TP1, TP2) of the return connection wires RW1, RW2 protruding out from the insertion side 1 10a, are not located in the slot-position layer L1 in the radial direction RD, but is arranged without overlapping in the radial direction RD and aligned with the rotor accommodation space 150. On the other hand, the insertion slot-positions of return connection wires RW1, RW2 in the slot layer L1 are all different. Such design makes multiple return connection wires RW1, RW2 of the same phase winding are not arranged densely in both axial direction AD and radial direction RD, which can reduce wire bending, reduce axial space, and reduce assembly process. Both the return connection wires RW1, RW2 are suitable for the windings Y1 and Y2 of the above-mentioned U, V, W-phases, so the same set of return connection wires RW1, RW2 can be assembled corresponding to the windings Y1 and Y2 at the same time, thereby reducing material preparation costs.

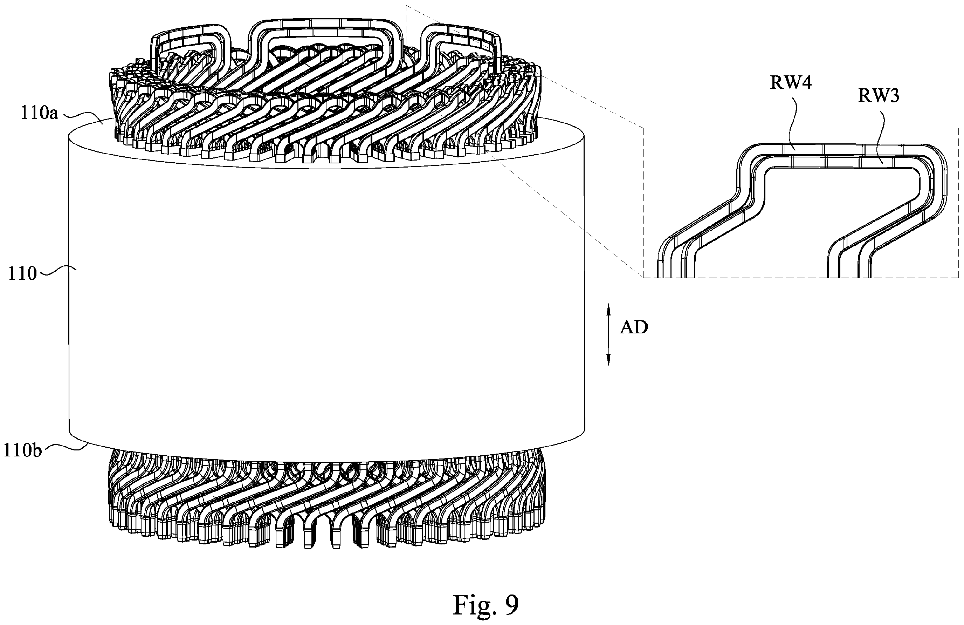

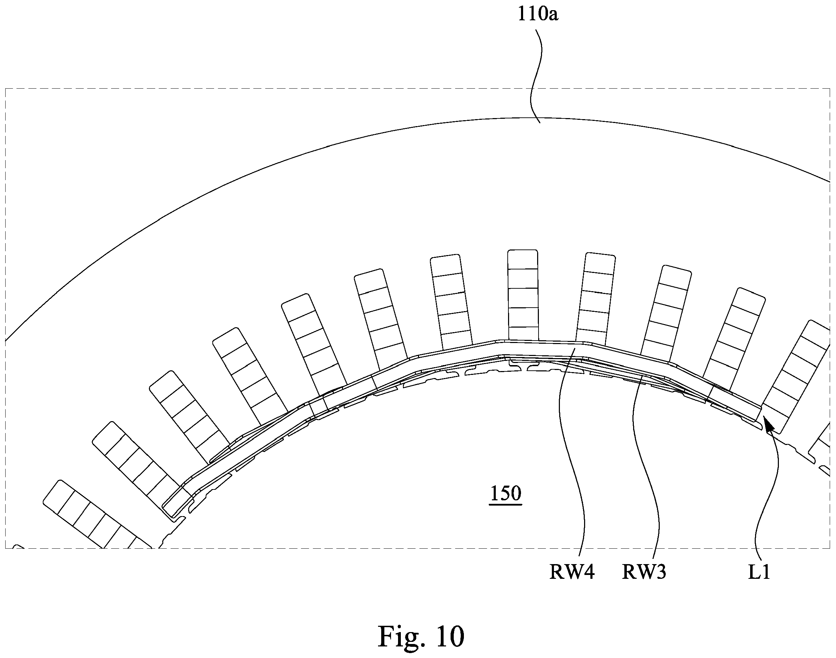

Reference is made to Figs. 9 and 10, Fig. 9 illustrates a perspective view of returm wires in a winding structure of a motor stator according to another embodiment of the present disclosure, and Fig. 10 illustrates a top view of the returm wires in Fig. 9. Both ends of the return connection wires RW3, RW4 and the portion protruding from the insertion side 110a of the stator core are arranged at the slot-position layer L 1 closest to the rotor accommodation space 150. As can be seen from Figure 9, the return connection wires RW3, RW4 have top portions that are approximately aligned in their heights in the axial direction AD. Specifically, the return connection wires RW3, RW4 have similar profiles, but the return connection wire RW3 is smaller than the return connection wire RW4. Therefore, the return connection wire RW3 can be placed within the profile of the return connection wire RW4 in the axial direction AD, thereby reducing wire bending, reducing axial space, and reducing assembly process. As can be seen from Figure 10, the portions of the return connection wires RW3, RW4 protruding from the insertion side 110a of the stator core are both aligned in the axial direction AD and located in the slot-position layer L1. Both the return connection wires RW3, RW4 are suitable for the windings Y1 and Y2 of the above-mentioned U, V, and W-phases. Therefore, the same set of return connection wires RW3, RW4 can be used for the assembly of windings Y1 and Y2 at the same time, thereby reducing material preparation costs.

The above-mentioned return connection wires of different phases are used to connect two windings in opposite directions in the same slot-position layer (for example, L1). The portions of the return connection wires protruding from the insertion side 110a of the stator core 110 are not overlapped with each other in the radial direction RD or in the axial direction AD, such as U-phase return connection wires (as shown in Figure 4, RWU1, RWU2), V-phase return connection wires (as shown in Figure 5, RWV1, RWV2) and W-phase return connection wires (as shown in Figure 6, RWW1, RWW2) have portions protruding from the insertion side 110a of the stator core 110 and not overlapped with each other in the radial direction RD (refer to Figures 8 and 10). Or, U-phase return connection wires (as shown in Figure 4, RWU1, RWU2), V-phase return connection wires (as shown in Figure 5, RWV1, RWV2) and W-phase return connection wires (as shown in Figure 6, RWW1, RWW2), have portions protruding from the insertion side 110a of the stator core 110 and not overlapped with each other in the axial direction AD (refer to Figures 7 and 9). In other embodiments of the present invention, any one of the U-phase return connection wires (such as RWU1 and RWU2 shown in Figure 4), any one of the V-phase return connection wires (such as RWV1 and RWV2 shown in Figure 5), and any one of the W-phase return connection wires (such as RWW1 and RWW2 shown in Figure 6) has portions protruding from the insertion side 110a of the stator core 110 and not overlapped with each other in the axial direction AD. In the embodiment of the present invention, all the return connection wires are connection wires in the same slot-position layer. For example, the two ends of the return connection wires are arranged in the slot-position layer (L1) closest to the rotor accommodation space 150.

The above example uses 48-slots stator core as the hairpin wire stator of the present invention, but the specific number of slots of the stator is not limited. The above example shows that each U-phase, V-phase, and W-phase has two (phase) slots, but more than two (phase) slots can also meet the requirements of the above winding method and winding structure.

The winding structure of the motor stator disclosed herein uses the above-mentioned winding method and winding structure, and the entry slot-positions of different phase windings are respectively arranged in different magnetic pole regions. For example, conventional entry slot-positions of the windings of a specific phase are arranged in different magnetic pole regions, but are offset in current design so that the return connection wires of different phase windings protruding from the insertion side of the stator core are not overlapped with each other in the radial direction. Therefore, the design of return connection wires can be simplified and the three-phase windings can share identical return connection wires. The shape and type of wires can be reduced, thereby effectively controlling the type and production complexity of wires required to manufacture the motor stator, and reducing the axial space configuration.

## Claims

1. A motor stator winding structure comprising:
a ring-shaped stator core (110) defining a rotor accommodation space (150) at a center of the stator core (110), wherein the stator core (110) comprises an insertion side (1 10a) and an extension side (110b) allowing a plurality of hairpin wires (120) inserted from the insertion side (110a) and extended out from the extension side (110b);
a plurality of slot-positions disposed on the stator core (110) and surrounding the rotor accommodation space (150) circumferentially, the slot-positions forming a plurality of radially-adjacent slot-position layers (L1-L6), the stator core (110) comprising a plurality of magnetic pole regions (P1-P8), each magnetic pole region comprising a plurality of phases (U, W, V), each phase comprising a plurality of phase slots,
wherein the hairpin wires (120) are configured to be disposed into the slot-positions of the phase slots of the same phases of the magnetic pole regions (P1-P8), the hairpin wires (120) are connected to form a plurality of parallel windings (Y1, Y2), the windings comprise:
at least one first phase winding (U phase Y1, Y2) comprising a plurality of first hairpin wires of the hairpin wires inserted from an entry phase slot-position (Y1_in, Y2_in) of a first phase (U), and comprising a plurality of first phase return connection wires (RWU1, RWU2);
at least one second phase winding (V phase Y1, Y2) comprising a plurality of second hairpin wires of the hairpin wires inserted from an entry phase slot-position (Y1_in, Y2_in) of a second phase (V), and comprising a plurality of second phase return connection wires (RWV1, RWV2); and
at least one third phase winding (W phase Y1, Y2) comprising a plurality of third hairpin wires of the hairpin wires inserted from an entry phase slot-position (Y1_in, Y2_in) of a third phase (W), and comprising a plurality of third phase return connection wires (RWW1, RWW2),
wherein the entry phase slot-position (Y1_in, Y2_in) of the first phase (U), the entry phase slot-position (Y1_in, Y2_in) of the second phase (V) and the entry phase slot-position (Y1_in, Y2_in) of the third phase (W) are located in three different magnetic pole regions (P1-P8) respectively,
wherein the first phase return connection wires (RWU1, RWU2), the second phase return connection wires (RWV1, RWV2) and the third phase return connection wires (RWW1, RWW2) have respective portions that protrude from the insertion side (110a) of the stator core (110) and are not overlapped with each other in an axial direction (AD) of the stator core (110).

2. The motor stator winding structure of claim 1, wherein the entry phase slot-position (Y1_in, Y2_in) of the first phase (U), the entry phase slot-position (Y1_in, Y2_in) of the second phase (V) and the entry phase slot-position (Y1_in, Y2_in) of the third phase (W) are located in three continuous and different magnetic pole regions (P1-P8) respectively.

3. The motor stator winding structure of claim 1, wherein the entry phase slot-position (Y1_in, Y2_in) of the first phase (U), the entry phase slot-position (Y1_in, Y2_in) of the second phase (V) and the entry phase slot-position (Y1_in, Y2_in) of the third phase (W) are all located at a farthest one (L6) of the radially-adjacent slot-position layers (L1-L6) from the rotor accommodation space (150).

4. The motor stator winding structure of claim 1, wherein either one of the first phase return connection wires (RWU1, RWU2), the second phase return connection wires (RWV1, RWV2), and the third phase return connection wires (RWW1, RWW2) has two ends disposed at a closest one (L1) of the radially-adjacent slot-position layers (L1-L6) from the rotor accommodation space (150).

5. The motor stator winding structure of claim 1, wherein the first phase return connection wires (RWU1, RWU2) have different spans at the insertion side (110a) of the stator core (110), the second phase return connection wires (RWV1, RWV2) have different spans at the insertion side (110a) of the stator core (110), and the third phase return connection wires (RWW1, RWW2) have different spans at the insertion side (110a) of the stator core (110).

6. The motor stator winding structure of claim 5, wherein either one of the first phase return connection wires (RWU1, RWU2), the second phase return connection wires (RWV1, RWV2), and the third phase return connection wires (RWW1, RWW2) has a span at the insertion side (110a) of the stator core (110), the span is a pole pitch plus one slot or a pole pitch minus one slot.

7. The motor stator winding structure of claim 1, wherein the first phase return connection wires (RWU1, RWU2) have respective top portions that are aligned with each other in the axial direction (AD) of the stator core (110), the second phase return connection wires (RWV1, RWV2) have respective top portions that are aligned with each other in the axial direction (AD) of the stator core (110), and the third phase return connection wires (RWW1, RWW2) have respective top portions that are aligned with each other in the axial direction (AD) of the stator core (110).

8. The motor stator winding structure of claim 1, wherein the first phase return connection wires (RWU1, RWU2) have respective top portions that are overlapped with the rotor accommodation space (150) in a radial direction (RD), the second phase return connection wires (RWV1, RWV2) have respective top portions that are overlapped with the rotor accommodation space (150) in the radial direction (RD), and the third phase return connection wires (RWW1, RWW2) have respective top portions that are overlapped with the rotor accommodation space (150) in the radial direction (RD).

9. The motor stator winding structure of claim 1, wherein the first phase return connection wires (RWU1, RWU2) have respective portions that protrude from the insertion side (110a) of the stator core (110) and are overlapped with each other in the axial direction (AD) of the stator core (110), the second phase return connection wires (RWV1, RWV2) have respective portions that protrude from the insertion side (110a) of the stator core (110) and are overlapped with each other in the axial direction (AD) of the stator core (110), and the third phase return connection wires (RWW1, RWW2) have respective portions that protrude from the insertion side (110a) of the stator core (110) and are overlapped with each other in the axial direction (AD) of the stator core (110).

10. The motor stator winding structure of claim 1, wherein each of the hairpin wires (120) has a U-shaped portion (120a), a first leg portion (120b) and a second leg portion (120c), the first leg portion (120b) and the second leg portion (120c) are inserted into corresponding slot-positions from the insertion side (110a) and extended out from the extension side (110b), and bent to be connected with adjacent first leg portion (120b) and second leg portion (120c) of a corresponding one of the hairpin wires (120), wherein the U-shaped portion (120a) is disposed at the insertion side (1 10a) of the stator core (110).

## Amended claims

### Amended claims in accordance with Rule 137(2) EPC.

1. A motor stator winding structure comprising:
a ring-shaped stator core (110) defining a rotor accommodation space (150) at a center of the stator core (110), wherein the stator core (110) comprises an insertion side (110a) and an extension side (110b) allowing a plurality of hairpin wires (120) inserted from the insertion side (110a) and extended out from the extension side (110b);
a plurality of slot-positions disposed on the stator core (110) and surrounding the rotor accommodation space (150) circumferentially, the slot-positions forming a plurality of radially-adjacent slot-position layers (L1-L6), the stator core (110) comprising a plurality of magnetic pole regions (P1-P8), each magnetic pole region comprising a plurality of phases (U, W, V), each phase comprising a plurality of phase slots,
wherein the hairpin wires (120) are configured to be disposed into the slot-positions of the phase slots of the same phases of the magnetic pole regions (P1-P8), the hairpin wires (120) are connected to form a plurality of parallel windings (Y1, Y2), the windings comprise:
at least one first phase winding (U phase Y1, Y2) comprising a plurality of first hairpin wires of the hairpin wires inserted from an entry phase slot-position (Y1_in, Y2_in) of a first phase (U), and comprising a plurality of first phase return connection wires (RWU1, RWU2);
at least one second phase winding (V phase Y1, Y2) comprising a plurality of second hairpin wires of the hairpin wires inserted from an entry phase slot-position (Y1_in, Y2_in) of a second phase (V), and comprising a plurality of second phase return connection wires (RWV1, RWV2); and
at least one third phase winding (W phase Y1, Y2) comprising a plurality of third hairpin wires of the hairpin wires inserted from an entry phase slot-position (Y1_in, Y2_in) of a third phase (W), and comprising a plurality of third phase return connection wires (RWW1, RWW2), **characterized in that**
wherein the entry phase slot-position (Y1_in, Y2_in) of the first phase (U), the entry phase slot-position (Y1_in, Y2_in) of the second phase (V) and the entry phase slot-position (Y1_in, Y2_in) of the third phase (W) are located in three different magnetic pole regions (P1-P8) respectively,
wherein the first phase return connection wires (RWU1, RWU2), the second phase return connection wires (RWV1, RWV2) and the third phase return connection wires (RWW1, RWW2) have respective portions that protrude from the insertion side (110a) of the stator core (110) and are not overlapped with each other in an axial direction (AD) of the stator core (110).

2. The motor stator winding structure of claim 1, wherein the entry phase slot-position (Y1_in, Y2_in) of the first phase (U), the entry phase slot-position (Y1_in, Y2_in) of the second phase (V) and the entry phase slot-position (Y1_in, Y2_in) of the third phase (W) are located in three continuous and different magnetic pole regions (P1-P8) respectively.

3. The motor stator winding structure of claim 1, wherein the entry phase slot-position (Y1_in, Y2_in) of the first phase (U), the entry phase slot-position (Y1_in, Y2_in) of the second phase (V) and the entry phase slot-position (Y1_in, Y2_in) of the third phase (W) are all located at a farthest one (L6) of the radially-adjacent slot-position layers (L1-L6) from the rotor accommodation space (150).

4. The motor stator winding structure of claim 1, wherein either one of the first phase return connection wires (RWU1, RWU2), the second phase return connection wires (RWV1, RWV2), and the third phase return connection wires (RWW1, RWW2) has two ends disposed at a closest one (L1) of the radially-adjacent slot-position layers (L1-L6) from the rotor accommodation space (150).

5. The motor stator winding structure of claim 1, wherein the first phase return connection wires (RWU1, RWU2) have different spans at the insertion side (110a) of the stator core (110), the second phase return connection wires (RWV1, RWV2) have different spans at the insertion side (110a) of the stator core (110), and the third phase return connection wires (RWW1, RWW2) have different spans at the insertion side (110a) of the stator core (110).

6. The motor stator winding structure of claim 5, wherein either one of the first phase return connection wires (RWU1, RWU2), the second phase return connection wires (RWV1, RWV2), and the third phase return connection wires (RWW1, RWW2) has a span at the insertion side (110a) of the stator core (110), the span is a pole pitch plus one slot or a pole pitch minus one slot.

7. The motor stator winding structure of claim 1, wherein the first phase return connection wires (RWU1, RWU2) have respective top portions that are aligned with each other in the axial direction (AD) of the stator core (110), the second phase return connection wires (RWV1, RWV2) have respective top portions that are aligned with each other in the axial direction (AD) of the stator core (110), and the third phase return connection wires (RWW1, RWW2) have respective top portions that are aligned with each other in the axial direction (AD) of the stator core (110).

8. The motor stator winding structure of claim 1, wherein the first phase return connection wires (RWU1, RWU2) have respective top portions that are overlapped with the rotor accommodation space (150) in a radial direction (RD), the second phase return connection wires (RWV1, RWV2) have respective top portions that are overlapped with the rotor accommodation space (150) in the radial direction (RD), and the third phase return connection wires (RWW1, RWW2) have respective top portions that are overlapped with the rotor accommodation space (150) in the radial direction (RD).

9. The motor stator winding structure of claim 1, wherein the first phase return connection wires (RWU1, RWU2) have respective portions that protrude from the insertion side (110a) of the stator core (110) and are overlapped with each other in the axial direction (AD) of the stator core (110), the second phase return connection wires (RWV1, RWV2) have respective portions that protrude from the insertion side (110a) of the stator core (110) and are overlapped with each other in the axial direction (AD) of the stator core (110), and the third phase return connection wires (RWW1, RWW2) have respective portions that protrude from the insertion side (110a) of the stator core (110) and are overlapped with each other in the axial direction (AD) of the stator core (110).

10. The motor stator winding structure of claim 1, wherein each of the hairpin wires (120) has a U-shaped portion (120a), a first leg portion (120b) and a second leg portion (120c), the first leg portion (120b) and the second leg portion (120c) are inserted into corresponding slot-positions from the insertion side (110a) and extended out from the extension side (110b), and bent to be connected with adjacent first leg portion (120b) and second leg portion (120c) of a corresponding one of the hairpin wires (120), wherein the U-shaped portion (120a) is disposed at the insertion side (110a) of the stator core (110).
